# EUROPEAN PATENT SPECIFICATION

(11) **EP 3 098 039 B1**
(45) Date of publication and mention of the grant of the patent: **10.01.2018**
(21) Application number: 15169747.1
(22) Date of filing: 28.05.2015
(51) Int. Cl.: B26D 7/06, B26F 1/38, B21D 43/20, B21D 43/28, B26F 1/40, B65G 60/00

(54) **A CONVEYING AND MANAGING SYSTEM OF PALLETS FOR LOADING/UNLOADING A PANEL-CUTTING MACHINE**
FÖRDER- UND VERWALTUNGSSYSTEM VON PALETTEN ZUM BE- UND ENTLADEN EINER PANEELSCHNEIDMASCHINE
SYSTÈME DE TRANSPORT ET GESTION DE PALETTES POUR LA CHARGE ET LA DÉCHARGE D'UNE MACHINE À COUPER DES PANNEAUX

(43) Date of publication of application: 30.11.2016
(73) Proprietor: ELITRON IPM S.r.l., 63813 Monte Urano (FM) (IT)
(72) Inventor: Gallucci, Giuseppe, 63813 Monte Urano (FM) (IT)
(74) Representative: Dall'Olio, Christian

(56) References cited:
- WO-A1-2012/017336
- DE-A1-102007 014 314
- DE-B1- 1 920 999
- JP-A- 2001 150 305

## Description

The present invention relates to the technical sector of machine for cutting panels. In particular, the invention relates to a system for movement (and managing) system of pallets towards/from a panel-cutting machine
A machine for cutting panels comprises an operating unit provided with one or more cutting heads.
The machine acts on a working plane which is at a certain height from the ground and which restingly receives the panel to be cut.
The panels to be cut, which have considerable dimensions, are accumulated in a storehouse, and from there are positioned stacked on one another on a pallet.
A system for moving pallets of known type includes a first conveyor upstream of the working plane which conveys the pallets (and the stack of panels arranged thereon) from a feeding station towards a loading station of the panels to be cut, arranged in proximity of the working plane.
A second conveyor is further comprised downstream of the working plane, which extends from an unloading station of the cut panels to an outlet station.
First support means are included in the loading station, for lifting the pallets so that the head panel of the stack of panels can be transferred onto the working plane to be cut. In detail, the pallet is raised gradually as the stack of panels diminishes, until all the panels of the stack have been transferred onto the working plane.
Then the empty pallet is lowered and brought to the warehouse so as to receive another stack of panels to be cut.
Gradually, as the panels are cut, they are transferred from the working plane onto an empty pallet positioned in the unloading station. Second support means are provided here, so that the pallet can be raised and then gradually lowered so as to receives the cut panels up to forming a second stack.
The pallet is then brought by the second conveyor towards an outlet station, where the single panels are collected from the stack and the cut parts are separated from the waste parts.
The prior art system described above however has some drawbacks.
In fact, the empty pallets in the loading station are sent to the warehouse so as to receive another stack of panels to be cut, or are moved into the unloading station so as to receive a stack of cut panels. In this last case suitable gripping and movement means are included (such as, for example, handlers).
Therefore, the management of the pallets is particularly complicated and poorly practical, and where requested the use of handlers is also expensive. Document DE19 20 999 B discloses a movement and managing system of pallets according to the preamble of claim 1.
An aim of the present invention is to obviated the above-mentioned drawback. The above aim is attained with a movement and managing system of pallets towards/from a panel-cutting machine according to claim 1. The disclosed system advantageously enables a managing and moving system of the pallets that is practical and functional, differently to the prior art. Further, its use involves modest costs with respect to the known systems.
Specific embodiments of the invention and further advantages thereof will emerge more fully from the following description, with the aid of the figures of the drawings, in which:
- figures 1, 2 and 3 illustrate three lateral views of a system according to the invention, in three different operating situations;
- figure 4 is a schematic view, in plan view, of a system according to the invention.
With reference to the accompanying figures of the drawings, reference numeral (1) denotes a movement and managing system (1) of pallets (P) towards/from a panel-cutting machine (M). The machine (M) is, for example, of the type described in documents EP 2.488.333 and EP 2.601.121, filed in the name of the present Applicant.

The system (1) comprises a working plane (2) on which the panel-cutting machine (M) acts. The working plane (2) extends longitudinally between a loading station (C) of panels (F) to be cut and an unloading station (S) of cut panels (F); the work plane is further at a predetermined height from the ground and is predisposed to restingly receive a panel (F) to be cut.

The system (1) further comprises first conveyor means (3) which develop from an inlet station (I) to the loading station (C) of the panels (F) to be cut. The first conveyor means are predisposed to convey a pallet (P) on which a stack of panels (F) to be cut is positioned from the inlet station (I) to the loading station (C); in particular, the first conveyor means (3) are arranged at a lower height from the ground than the working plane (2).

Further, the system (1) further comprises second conveyor means (4) which develop from the loading station (C) to an outlet station (U). The second conveyor means (4) are predisposed to convey a pallet (P) on which a stack of panels (F) to be cut is positioned from the unloading station (S) to the outlet station (U) and are arranged at a lower height from the ground than the working plane (2).

The system (1) comprises first support means (5), arranged at the loading station (C) and actuable such that a pallet (P) on which a stack of panels (F) to be cut is positioned can be vertically moved upwards, in a stepped fashion, between a first position (Q1) and a second position (not visible in the figures), so as to enable, time-by-time, transfer (using means of known type) of a head panel of the stack of panels (F) (i.e. the panel on top of the stack) on the working plane (2). The first support means (5) are actuable such that the empty pallet (F) in the second position can be moved vertically downwards into the first position (Q1).

The system (1) further comprises second support means (6), arranged in the unloading station (S) and actuable such that an empty pallet (P) positioned in the unloading station (S) can be moved vertically upwards from a first position (not visible in the figures) to a second position (Q2); and are actuable such that the pallet (P) can be moved vertically, in a stepped fashion, downwards between the second position (Q2) and the first position, so as to enable, time-by-time (using known means), transfer of a cut panel (F) onto the working plane (2) on the pallet (P), so as to form a stack of panels (F). Clearly, when a pallet (P) is in the second position thereof in the loading station (C) or in the unloading station (S) it is substantially coplanar to the working plane (2).

In particular, the system (1) comprises third conveyor means (7) which develop at a lower height than the working plane (2), from the loading station (C) to the unloading station (S), and are predisposed to convey an empty pallet (P) from the loading station (C) to the unloading station (S).
The system (1) of the invention advantageously enables particularly practical moving and managing of the pallets towards and from a machine (M) for cutting the panels (F).

In fact, with the system (1) of the invention an empty pallet (P) which is in the loading station (C), following transfer of the panels (F) to be cut previously arranged thereon on the working plane (2), can be directly conveyed to the unloading station (S) where it can receive the cut panels.

In this way all the operations necessary for removing the empty pallets (P) in the loading station (C) which were necessary in the prior art are eliminated, as well as the operations for predisposing empty pallets in the unloading station (S).

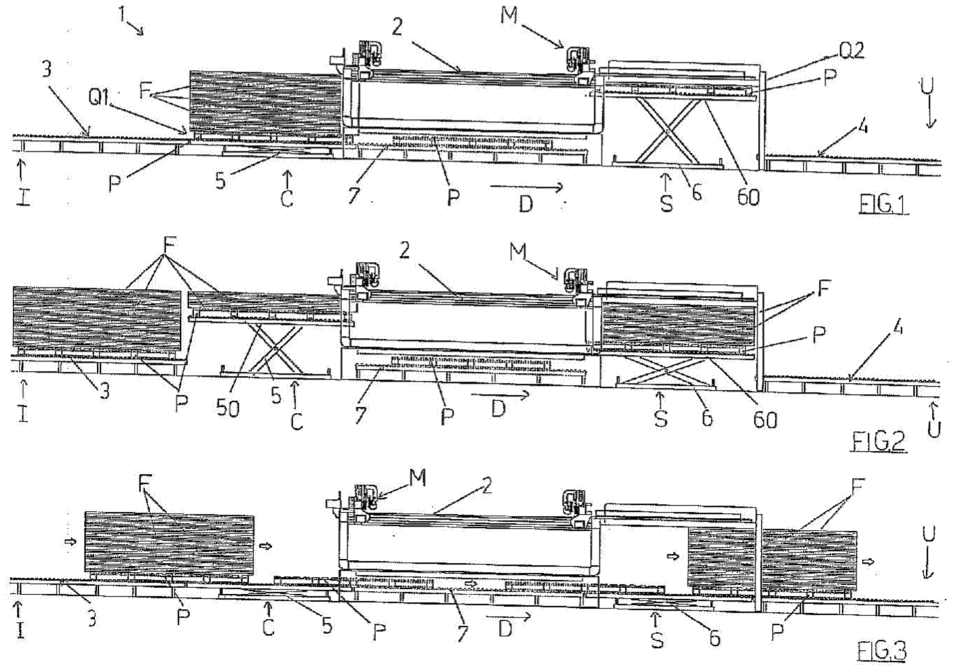

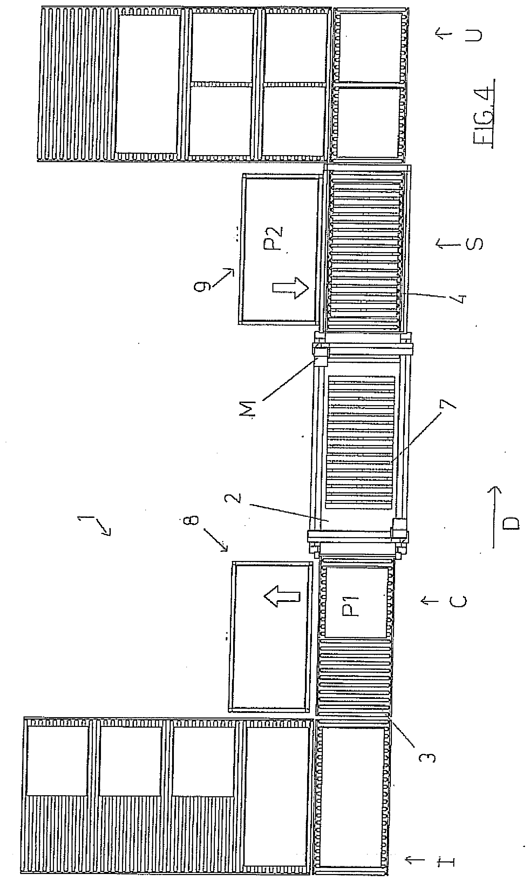

In the first illustrated embodiment, the first conveyor means (3), the second conveyor means (4) and the third conveyor means (7) develop along a longitudinal direction (D) parallel to the longitudinal development of the working plane (2). Naturally, the first conveyor means (3), the second conveyor means (4) and the third conveyor means (7) can also develop along different directions, for example in directions perpendicular to the above-mentioned longitudinal direction (D) (see for example figure 4).
In greater detail, in the accompanying figures the third conveyor means (7) are arranged below the working plane (2) (visible in a broken line for example in figures 1-3). Therefore, with this specification, the system (1) of the invention is particularly compact.
In the illustrated embodiment, the first conveyor means (3), the second conveyor means (4) and the third conveyor means (7) are arranged at a same height.
Still with reference to the accompanying figures, the first conveyor means (3), the second conveyor means (4) and the third conveyor means (7) comprise a roller conveyor.
In the illustrated embodiment, the first support means (5) and the second support means (6) each comprise a bench (50, 60) in turn comprising a roller conveyor.
With particular reference to figure 4, the system further comprises: a first warehousing station (8) arranged by a flank of the loading station (C); first transfer means (not illustrated) for transferring a first empty pallet (P1) having a determined size from the loading station (C) to the first warehousing station (8). This variant further includes a second warehousing station (9) arranged by a flank of the unloading station (S) and containing at least a second empty pallet (P2) having a determined dimension, greater than the dimension of the first pallet (P1), and second transfer means (not illustrated), for transferring the second pallet (P2) from the second warehousing station (9) to the unloading station (S). Detecting means are provided (not illustrated) for detecting a dimension of the first pallet (P1) arranged at the loading station (C).
To better understand the advantage of this particular embodiment, note that usually the panels (F) are of a standard type, and can be of a first dimension or a second dimension, which is double with respect to the first dimension. The pallets (P) which go from the inlet station (I) and reach the unloading station C) are also dimensioned as a consequence of the above, i.e. there are first pallets (P1) present of a first dimension and second pallets (P2) of a second dimension, which is usually double the first dimension.
This particular embodiment is advantageous in various cases, for example in a case in which a first pallet (P1) reaches the loading station (C) and then a second pallet (P2) must be conveyed after the first pallet (P1) towards the loading station (C). In this case, therefore, the above-described variant is such that the panels (F) of the second pallet (P2) which reaches the loading station (C) (which could not be received for dimensional reasons from the first pallet (P1)) can be received in the unloading station (S), where another second pallet (P2) is taken which before was located in the second warehousing station (9).
The above-described is understood to have been described by way of nonlimiting example, and any constructional variants thereof are understood to fall within the scope of the invention, as defined by the appended claims.

## Claims

1. A movement and managing system (1) of pallets (P) towards/from a panel-cutting machine (M), comprising:
- a working plane (2) on which the panel-cutting machine (M) acts, a loading station (C) and an unloading station (S), the working plane (2) being at a predetermined height from the ground between the loading station (C) and a unloading station (S);
- first conveyor means (3) which: develop from an inlet station (I) to the loading station (C); are predisposed to convey a pallet (P) on which a stack of panels (F) to be cut is positioned from the inlet station (I) to the loading station (C); are arranged at a lower height than the working plane (2);
- second conveyor means (4) which: develop from the unloading station (S) to an outlet station (U); are predisposed to convey a pallet (P) on which a stack of cut panels (P) is positioned from the unloading station (S) to the outlet station (U); are arranged at a lower height than the working plane (2);
- first support means (5), arranged at the loading station (C) and actuable such that a pallet (P) on which a stack of panels (F) to be cut is positioned can be vertically moved upwards, in a stepped fashion, between a first position (Q1) and a second position, so as to enable, time-by-time, transfer of a head panel of the stack of panels (F) on the working plane (2); and are actuable such that the pallet (P) when empty in the second position can be moved vertically downwards into the first position (Q1);
- second support means (6), arranged in the unloading station (S) and actuable such that an empty pallet (P) positioned in the unloading station (S) can be moved vertically upwards from a first position to a second position (Q2); and are actuable such that the pallet (P) can be moved vertically, in a stepped fashion, downwards between the second position (Q2) and the first position, so as to enable, time-by-time, transfer of a cut panel (F) onto the working plane (2) on the pallet (P), so as to form a stack of panels (F) on the pallet (P);
**characterised in that**
the working plane (2) is predisposed to restingly receive the panel (F) to be cut by the panel-cutting machine (M), the working plane (2) develops in a longitudinal direction and extends between the loading station (C) and the unloading station (S)
and **in that** it comprises:
third conveyor means (7) which develop at a lower height than the working plane (2) and are arranged below the working plane (2) from the loading station (C) to the unloading station (S), and are predisposed to convey an empty pallet (P) from the loading station (C) to the unloading station (S).

2. The system (1) of any one of the preceding claims, wherein the first conveyor means (3), the second conveyor means (4) and the third conveyor means (7) are arranged at a same height.

3. The system (1) of any one of the preceding claims, wherein the first conveyor means (3), the second conveyor means (4) and the third conveyor means (7) comprise a roller conveyor.

4. The system (1) of any one of the preceding claims, further comprising: a first warehousing station (8) arranged by a flank of the loading station (C); first transfer means for transferring a first empty pallet (P1) having a determined size from the loading station (C) to the first warehousing station (8); and a second warehousing station (9) arranged by a flank of the unloading station (S) and containing at least a second empty pallet (P2) having a determined dimension, greater than the dimension of the first pallet (P1); second transfer means, for transferring the second pallet (P2) from the second warehousing station (9) to the unloading station (S); detecting means, for detecting a size of the first pallet (P1) arranged in the loading station (C).

5. The system (1) of any one of the preceding claims, wherein the first conveyor means (3), the second conveyor means (4) and the third conveyor means (7) develop along a longitudinal direction (D) parallel to the longitudinal development of the working plane (2).

6. The system of any one of the preceding claims, wherein the first support means (5) and the second support means (6) each comprise a bench (50, 60) in turn comprising a roller conveyor.

## Patentansprüche

1. Förder- und Verwaltungssystem (1) zum Fördern von Paletten (P) zu/von einer Plattenschneidmaschine (M), Folgendes beinhaltend:
- eine Arbeitsfläche (2), auf welche die Plattenschneidmaschine (M) wirkt, eine Ladestation (C) und eine Entladestation (S), wobei die Arbeitsfläche (2) auf einer vorbestimmten Höhe vom Boden zwischen der Ladestation (C) und der Entladestation (S) angeordnet ist;
- erste Fördermittel (3), die: sich von einer Einlaufstation (I) zu der Ladestation (C) erstrecken; dafür ausgelegt sind, eine Palette (P), auf der ein Stapel zu schneidender Platten (F) angeordnet ist, von der Einlaufstation (I) zu der Ladestation (C) zu befördern; auf einer niedrigeren Höhe als die Arbeitsfläche (2) angeordnet sind;
- zweite Fördermittel (4), die: sich von der Entladestation (S) zu einer Auslaufstation (U) erstrecken; dafür ausgelegt sind, eine Palette (P), auf der ein Stapel geschnittener Platten (F) angeordnet ist, von der Entladestation (S) zu der Auslaufstation (U) zu befördern; auf einer niedrigeren Höhe als die Arbeitsfläche (2) angeordnet sind;
- erste Trägermittel (5), die an der Ladestation (C) angeordnet sind und die derart betätigt werden können, dass eine Palette (P), auf der ein Stapel zu schneidender Platten (F) angeordnet ist, schrittweise vertikal nach oben bewegt werden kann, zwischen einer ersten Position (Q1) und einer zweiten Position, um nach und nach die Übergabe einer jeweils oberen Platte des Stapels von Platten (F) auf die Arbeitsfläche (2) zu ermöglichen; und die derart betätigt werden können, dass die Palette (P), wenn sie leer ist und sich in der zweiten Position befindet, vertikal nach unten in die erste Position (Q1) bewegt werden kann;
- zweite Trägermittel (6), die in der Entladestation (S) angeordnet sind und die derart betätigt werden können, dass eine leere Palette (P), die sich in der Entladestation (S) befindet, vertikal nach oben von einer ersten Position in eine zweite Position (Q2) bewegt werden kann; und die derart betätigt werden können, dass die Palette (P) schrittweise vertikal nach unten bewegt werden kann, zwischen der zweiten Position (Q2) und der ersten Position, um nach und nach die Übergabe einer geschnittenen Platte (F) auf der Arbeitsfläche (2) an die Palette (P) zu ermöglichen, um einen Stapel von Platten (F) auf der Palette (P) zu bilden;
**dadurch gekennzeichnet, dass**
die Arbeitsfläche (2) dafür ausgelegt ist, die von der Plattenschneidmaschine (M) zu schneidende Platte (F) aufliegend aufzunehmen, und die Arbeitsfläche (2) in einer Längsrichtung verläuft und sich zwischen der Ladestation (C) und der Entladestation (S) erstreckt,
und dadurch, dass es Folgendes beinhaltet:
dritte Fördermittel (7), die sich auf einer niedrigeren Höhe als die Arbeitsfläche (2) erstrecken und unterhalb der Arbeitsfläche (2) von der Ladestation (C) zu der Entladestation (S) angeordnet sind, und die dafür ausgelegt sind, eine leere Palette (P) von der Ladestation (C) zu der Entladestation (S) zu befördern.

2. System (1) nach dem vorhergehenden Anspruch, wobei die ersten Fördermittel (3), die zweiten Fördermittel (4) und die dritten Fördermittel (7) auf gleicher Höhe angeordnet sind.

3. System (1) nach einem der vorhergehenden Ansprüche, wobei die ersten Fördermittel (3), die zweiten Fördermittel (4) und die dritten Fördermittel (7) einen Rollenförderer beinhalten.

4. System (1) nach einem der vorhergehenden Ansprüche, ferner beinhaltend: eine erste Lagerstation (8), die an einer Seite der Ladestation (C) angeordnet ist; erste Transfermittel zum Überführen einer ersten leeren Palette (P1) vorbestimmter Größe von der Ladestation (C) zu der ersten Lagerstation (8); und eine zweite Lagerstation (9), die an einer Seite der Entladestation (S) angeordnet ist und zumindest eine zweite leere Palette (P2) vorbestimmter Größe enthält, die größer ist als die Abmessungen der ersten Palette (P1); zweite Transfermittel zum Überführen der zweiten Palette (P2) von der zweiten Lagerstation (9) zu der Entladestation (S); Erfassungseinrichtungen zur Erkennung einer Größe der ersten Palette (P1), die in der Ladestation (C) angeordnet ist.

5. System (1) nach einem der vorhergehenden Ansprüche, wobei sich die ersten Fördermittel (3), die zweiten Fördermittel (4) und die dritten Fördermittel (7) entlang einer Längsrichtung (D) erstrecken, die parallel zu der Längsausdehnung der Arbeitsfläche (2) ist.

6. System nach einem der vorhergehenden Ansprüche, wobei die ersten Trägermittel (5) und die zweiten Trägermittel (6) jeweils eine Bank (50, 60) beinhalten, die wiederum einen Rollenförderer beinhaltet.

## Revendications

1. Un système (1) de transport et de gestion de palettes (P) vers/depuis une machine (M) à couper des panneaux, comprenant :
- un plan de travail (2) sur lequel agit la machine (M) à couper des panneaux, une station de chargement (C) et une station de déchargement (S), le plan de travail (2) étant à une hauteur prédéfinie du sol entre la station de chargement (C) et la station de déchargement (S) ;
- des premiers moyens transporteurs (3) qui : se développent d'une station d'entrée (I) à la station de chargement (C) ; sont prévus pour transporter une palette (P), sur laquelle est placée une pile de panneaux (F) à couper, de la station d'entrée (I) à la station de chargement (C) ; sont disposés à une hauteur inférieure à celle du plan de travail (2) ;
- des deuxièmes moyens transporteurs (4) qui : se développent de la station de déchargement (S) à une station de sortie (U) ; sont prévus pour transporter une palette (P), sur laquelle est placée une pile de panneaux (F) coupés, de la station de déchargement (S) à la station de sortie (U) ; sont disposés à une hauteur inférieure à celle du plan de travail (2) ;
- des premiers moyens de support (5), disposés au niveau de la station de chargement (C) et pouvant être actionnés de manière à ce qu'une palette (P) sur laquelle est placée une pile de panneaux (F) à couper puisse être déplacée verticalement vers le haut, en mode à pas, entre une première position (Q1) et une deuxième position, afin de permettre, à chaque fois, le transfert d'un panneau de dessus de la pile de panneaux (F) sur le plan de travail (2) ; et pouvant être actionnés de manière à ce que la palette (P), quand celle-ci est vide dans la deuxième position, puisse être déplacée verticalement vers le bas dans la première position (Q1) ;
- des deuxièmes moyens de support (6), disposés dans la station de déchargement (S) et pouvant être actionnés de manière à ce qu'une palette vide (P) positionnée dans la station de déchargement (S) puisse être déplacée verticalement vers le haut d'une première position à une deuxième position (Q2) ; et pouvant être actionnés de manière à ce que la palette (P) puisse être déplacée verticalement, en mode à pas, vers le bas entre la deuxième position (Q2) et la première position, afin de permettre, à chaque fois, le transfert d'un panneau (F) coupé situé sur le plan de travail (2) sur la palette (P), pour former une pile de panneaux (F) sur la palette (P) ;
**caractérisé en ce que**
le plan de travail (2) est prévu pour recevoir en appui le panneau (F) devant être coupé par la machine (M) à couper des panneaux, le plan de travail (2) se développe dans une direction longitudinale et s'étend entre la station de chargement (C) et la station de déchargement (S),
et **en ce qu'**il comprend :
des troisièmes moyens transporteurs (7) qui se développent à une hauteur inférieure à celle du plan de travail (2) et sont disposés sous le plan de travail (2) depuis la station de chargement (C) jusqu'à la station de déchargement (S), et sont prévus pour transporter une palette vide (P) de la station de chargement (C) à la station de déchargement (S).

2. Le système (1) selon la revendication précédente, dans lequel les premiers moyens transporteurs (3), les deuxièmes moyens transporteurs (4) et les troisièmes moyens transporteurs (7) sont disposés à une même hauteur.

3. Le système (1) selon l'une quelconque des revendications précédentes, dans lequel les premiers moyens transporteurs (3), les deuxièmes moyens transporteurs (4) et les troisièmes moyens transporteurs (7) comprennent un transporteur à rouleaux.

4. Le système (1) selon l'une quelconque des revendications précédentes, comprenant en outre : une première station de stockage (8) disposée sur un côté de la station de chargement (C) ; des premiers moyens de transfert pour transférer une première palette vide (P1) ayant une taille définie de la station de chargement (C) à la première station de stockage (8) ; et une deuxième station de stockage (9) disposée sur un côté de la station de déchargement (S) et contenant au moins une deuxième palette vide (P2) ayant une taille définie, supérieure à la taille de la première palette (P1) ; des deuxièmes moyens de transfert, pour transférer la deuxième palette (P2) de la deuxième station de stockage (9) à la station de déchargement (S) ; des moyens de détection, pour détecter une taille de la première palette (P1) disposée dans la station de chargement (C).

5. Le système (1) selon l'une quelconque des revendications précédentes, dans lequel les premiers moyens transporteurs (3), les deuxièmes moyens transporteurs (4) et les troisièmes moyens transporteurs (7) se développent le long d'une direction longitudinale (D) parallèle au développement longitudinal du plan de travail (2).

6. Le système selon l'une quelconque des revendications précédentes, dans lequel les premiers moyens de support (5) et les deuxièmes moyens de support (6) comprennent, les uns et les autres, un banc (50, 60) comprenant à son tour un transporteur à rouleaux.
